# EUROPEAN PATENT SPECIFICATION

(11) **EP 0 524 207 B1**
(45) Date of publication and mention of the grant of the patent: **12.07.1995**
(21) Application number: 91906813.0
(22) Date of filing: 05.04.1991
(51) Int. Cl.: H05B 6/10

(54) **METHOD AND DEVICE FOR SURFACE HARDENING OF ROTATION SYMMETRICAL PARTS THROUGH INDUCTIVE HEATING BY MEANS OF AT LEAST TWO DIFFERENT FREQUENCIES**
VERFAHREN UND GERÄT ZUR OBERFLÄCHENHÄRTUNG VON ROTATIONSSYMMETRISCHEN TEILEN DURCH INDUKTIONSHEIZEN MITTELS WENIGSTENS ZWEI VERSCHIEDENER FREQUENZEN
METHODE ET DISPOSITIF DE TREMPE SUPERFICIELLE DE PIECES DE ROTATION SYMETRIQUES PAR CHAUFFAGE INDUCTIF AU MOYEN D'AU MOINS DEUX FREQUENCES DIFFERENTES

(30) Priority: 10.04.1990 DE 4011612
(43) Date of publication of application: 27.01.1993
(73) Proprietor: ELVA INDUKSJON A.S., N-3700 Skien (NO)
(72) Inventor: MARKEGARD, Leif, N-3700 Skien (NO); SCHWENK, Wolfgang, D-7295 Dornstetten (DE)
(74) Representative: Onn, Thorsten
(86) International application number: NO9100053
(87) International publication number: WO9115935

(56) References cited:
- US-A- 4 785 147

## Description

The invention relates a device for the inductive heating of rotation symmetrical parts of complex shape, e.g. gears, for surface hardening thereof, operating with at least two different frequencies. From prior art, relating to induction surface heating of gears by means of an enclosed round coil, it is known to be difficult to obtain even hardening depths both at tooth tip and root. By using a medium frequency, an acceptable result of hardening in the tooth root is obtainable, by not in the tip. Using high frequency will yield acceptable hardening at the tip, but unsatisfactory hardening results in the tooth root.

In order to solve theese problems, there are three known methods:
1) For each gear size and design, there must always be elected an optimum frequency.
   Through this approach, the possibilities of influencing the hardening profile is limited. A satisfactory result for all different embodiments of gears are not in any way obtainable.
2) Before a subsequent hardening by means of high frequency, the gear is heated to 500 - 700°C. The preheating can be made in an oven or by inductive means. Thereby, different solutions are in practice known; heating by lower or medium frequency in separate coil or low power preheating in the same high frequency coil. Also, a magnetic coupling between the preheating coil and the work piece, which at the same time lies in a high frequency coil, is possible (see German specification accepted for publication No. 1 233 896).
3) Two or more different frequencies are operating in a coil after one another in different time sections (German Patent No. 37 11 645-C1 and European Patent Publication No. 0 295 099).
   The practical problem of such a solution lies in the shortest possible switching time for the associated resonance frequency of the load circuit, as on one side a very high switching power for active - and reactive component is desirable (European Patent Publication No. 0 295 099) and on the other hand the total heating time including the various heating section only constitutes typically 0.5 - 1 s.

Based on this prior art, the present invention has as an object to provide a method and a device for uniform surface hardening of gears, by which the technologically conditioned short heating times of approximately 0.5 - 1 s are to be maintained without preheating, and by which time related problematic series switching between different frequencies is avoided.

This task is solved, according to the invention, by a device in which the outputs of a first converter, delivering high frequency, and a second converter, delivering medium frequency are connected in common to a single induction coil for operating said coil simultaneously, the first converter is a series resonant circuit type, the capacitor for series compensation of the induction coil reactive power providing a sufficient attenuation of medium frequency feedbacks being delivered from the second converter, and in which the second converter is made as a series resonant circuit type with an inductance and a further series capacitor in series between the output and the common junction of both converters, in order to suppress the high frequency feedback of the said first converter and to compensate the reactive power of said inductance.

Alternatively thereto, the second converter may be designed as a parallel resonant type, with an inductance in series and an additional capacitor parallel to the compensation capacitor, in order to suppress the high frequency feedbacks of said first converter and to compensate the reactive power of the said inductance.

Perferably, according to the invention, the first frequency of both said converters lies in a range of 50 kHz and 1.5 MHz and the second range of 1 - 20 kHz. Both frequencies differ, however, by half of a decade or more.

Embodiments of the invention are now further elucidated by means of the drawings.
- Figure 1: is a schematic view of the heating coil and the quenching device below, which is used with the present invention.
- Figure 2: illustrates the section II-II in Figure 1.
- Figure 3: is a schematic view of the first embodiment of the inventive device.
- Figure 4: illustrates the second embodiment of the device, according to the invention.

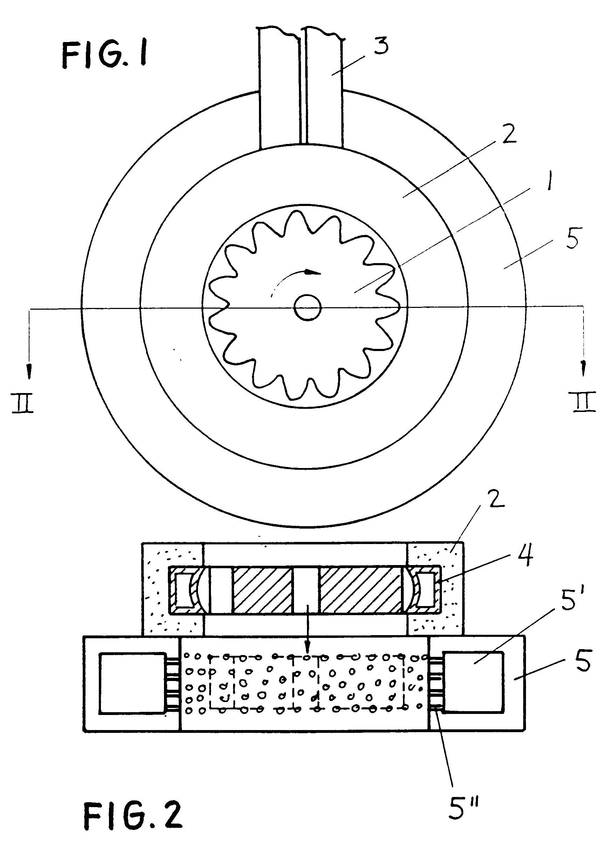

As an example there is in Figures 1 and 2 illustrated a coil 4 with a quenching device 5 for hardening of gears. The gear 1 to be hardened is located in an induction coil 4 with a magnetic core 2 and the electrical supply 3. During the heating, the gear is turned, in order to secure a uniform heating in a single turn coil 4. The inner side of this coil is so formed, that a uniform heating is obtained over the vertical height of the gear. Immediately after termination of the heating process, the gear is moved vertically into a quenching chamber 5 in order to secure a rapid cooling of said gear. In this process, the quenching fluid, e.g. water, flows from a channel 5′ through the orifices 5′′ onto the gear.

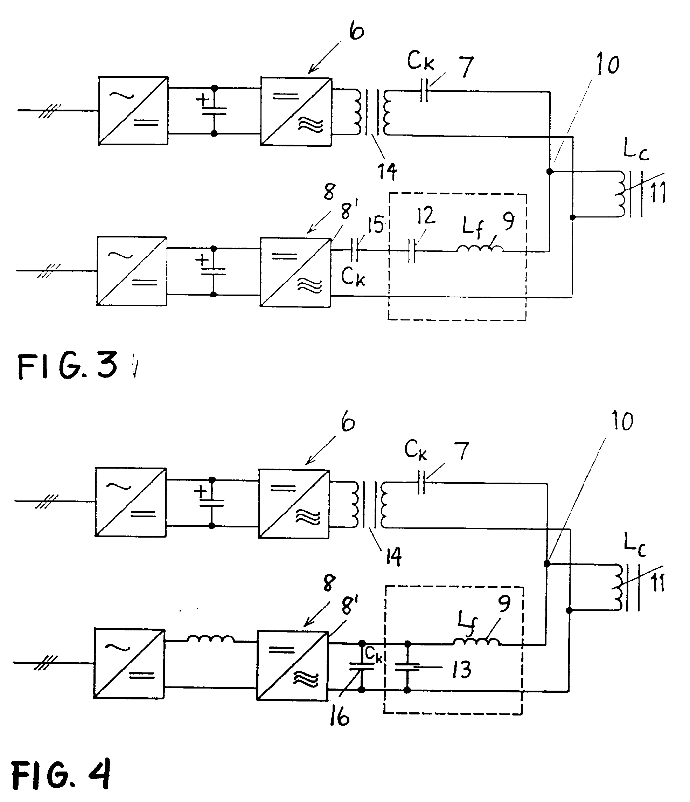

An interconnection of two converters with different frequencies requires a device which is designed for a lowest possible mutual influence of the converters, in order to avoid malfunctioning. In view of the high frequency converter 6 working with a series resonant circuit, the compensation capacitor 7 enables a sufficient attenuation of feedback of the lower frequency (see Figures 3 and 4). Theoretically there is also possible to use a high frequency converter in the form of parallel resonant circuit type. In order to suppress the medium frequency feedbacks, it is anyway necessary to incorporate a filter unit, consisting of a capacitor and an inductance in order to compensate the said capacitor. This solution is, relative to the series compensated embodiment, which does not require any additional filter, not satisfactory from an economical point of view. In addition, the said filter unit would complicate the frequency control of the parallel compensated high frequency converter to a substantial degree.

In order to suppress the high frequency feedback on the converter 8 of a lower frequency, there is used an inductance L_{f} 9 between the junction 10 and the output of the converter of lower frequency. In order to make use of influence of stray inductances in the wires and in a possible inserted high-current matching transformer, the junction 10 should lie as close as practically possible to the induction coil 11.

If a series resonant circuit type converter is used as converter for the lower frequency (see Figure 3), then the inductance L_{f} 9 including the stray inductance seen from the junction 10 should be at least four times greater than the inductance of the coil 11. If there instead is used a parallel resonant circuit converter as converter for the lower frequency (see Figure 4), then the inductance L_{f} 9 including the stray inductance between the junction 10 and the compensation capacitor 13 of the converter of lower frequency, as seen from the juction 10, should suitably be greater than the inductance of the coil 11.

In particular, both for the series resonance (Figure 3) as well as for the parallel resonance (Figure 4) variants of the converters of lower frequency there must be inserted a discrete inductance, in order to obtain a sufficient inductance L_{f} 9. This causes additional power losses and reactive power requirements. In order to compensate the additional reactive power, the power of the series compensation capasitor Cₖ 15 and that of the parallel compensation capacitor Cₖ 16 must be increased by a capacitance 12 (Figure 3) and a capacitance 13 (Figure 4), respectively.

At least one of the converters must have a transformer 14 at the output, in order to galvanically separate the outputs.

The advantages of the invention lie in according to one aspect in the high efficiency of the installed power, as both converters during the total heating interval deliver continuous power. Thereby is the shortest hardening process without preheating possible. In another aspect there is a greater degree of freedom in the configuration of hardening profiles for different gear sizes and embodiments, as the power of each converter is individually controllable. Further, only a minimum amount of heat will come into the gear, as no preheating is required. Thereby energy is saved, and the mechanical form changes are minimized. This is important in order to avoid post-processing. The induction coil can be conventionally made. Stationary heating or heating during advancement is possible.

## Claims

1. A device for inductive heating of rotation symmetrical parts of complex shape, e.g. gears for surface hardening thereof, operating with at least two different frequencies, **characterized** in that the outputs of a first converter (6), delivering high frequency, and a second converter (8) delivering medium frequency are connected in common to a single induction coil (11) for operating said coil simultaneously, the first converter (6) is of series resonant circuit type, the capacitor Cₖ (7) for series compensation of the reactive power of the induction coil (11) providing a sufficient attenuation of feedbacks of medium frequency being delivered from the second converter (8), and the second converter (8) is made as a series resonant circuit type with an inductance (9) and an additional series capacitor (12) in series between the output (8′) and the common junction (10) of both converters, in order to suppress the high frequency feedback of said first converter (6) and to compensate the reactive power of the said inductance (9).

2. A device for inductive heating of rotation symmetrical parts of complex shape, e.g. gears for surface hardening thereof, operating with at least two different frequencies, **characterized** in that the outputs of a first converter (6) delivering high frequency, and a second converter (8) delivering medium frequency are connected in common to a single induction coil (11) for operating said coil simultaneously, the first converter (6) is of series resonant circuit type, the capacitor Cₖ (7) for series compensation of the reactive power of the induction coil (11) providing a sufficient attenuation of feedbacks of medium frequency being delivered from the second converter (8), and the second converter (8) is made as a parallel resonant circuit type with an inductance (9) in series and an additional capacitance (13) parallel to the compensation capacitor Cₖ (16) in order to suppress the high frequency feedbacks of said first converter (6) and to compensate the reactive power of said inductance (9).

3. Device according to claim 1 or 2, **characterized** in that both converters (6, 8) have individually controllable power.

4. A device according to any of the claims 1-3, **characterized** in that the first frequency of both of said converters (6, 8) lies in a range of 50 kHz - 1.5 MHz, and that the second of the two said converters (6, 8) lies in a range of 1 - 20 kHz, the said two frequencies, however, differing by a half of a decade or more.

## Patentansprüche

1. Vorrichtung zum induktiven Erwärmen von rotationssymmetrischen Teilen komplexer Form, z.B. von Zahnrädern, zu deren Oberflächenhärtung, welche mit wenigstens zwei verschiedenen Frequenzen arbeitet, wobei die Ausgänge eines ersten, eine hohe Frequenz liefernden Umrichters (6) und eines zweiten, eine mittlere Frequenz liefernden Umrichters (8) gemeinsam mit einer einzelnen Induktionsspule (11) verbunden sind, um die Spule gleichzeitig zu betreiben,
**dadurch gekennzeichnet,**
daß der erste Umrichter (6) vom Reihenschwingkreis-Typ ist, wobei der Kondensator Cₖ (7) zur Reihenkompensation der Blindleistung der Induktionsspule (11) für eine ausreichende Dämpfung vom zweiten Umrichter (8) gelieferter Mittelfrequenzrückkopplungen sorgt, und daß der zweite Umrichter (8) als ReihenschwingkreisTyp mit einer Induktivität (9) und einem zusätzlichen Reihenkondensator (12) in Reihe zwischen dem Ausgang (8′) und der gemeinsamen Verbindung (10) der beiden Umrichter ausgeführt ist, um die Hochfrequenzrückkopplung des ersten Umrichters (6) zu unterdrücken und die Blindleistung der Induktivität (9) zu kompensieren.

2. Vorrichtung zum induktiven Erwärmen von rotationssymmetrischen Teilen komplexer Form, z.B. von Zahnrädern, zu deren Oberflächenhärtung, welche mit wenigstens zwei verschiedenen Frequenzen arbeitet, wobei die Ausgänge eines ersten, eine hohe Frequenz liefernden Umrichters (6) und eines zweiten, eine mittlere Frequenz liefernden Umrichters (8) gemeinsam mit einer einzelnen Induktionsspule (11) verbunden sind, um die Spule gleichzeitig zu betreiben,
**dadurch gekennzeichnet,**
daß der erste Umrichter (6) vom Reihenschwingkreis-Typ ist, wobei der Kondensator Cₖ (7) zur Reihenkompensation der Blindleistung der Induktionsspule (11) für eine ausreichende Dämpfung vom zweiten Umrichter (8) gelieferter Mittelfrequenzrückkopplungen sorgt, und daß der zweite Umrichter (8) als Parallelschwingkreis-Typ mit einer Induktivität (9) in Reihe und einer zusätzlichen Kapazität (13) parallel zu dem Kompensationskondensator Cₖ (16) ausgeführt ist, um die Hochfrequenzrückkopplungen des ersten Umrichters (6) zu unterdrücken und die Blindleistung der Induktivität (9) zu kompensieren.

3. Vorrichtung nach Anspruch 1 oder 2,
**dadurch gekennzeichnet,**
daß beide Umrichter (6, 8) individuell steuerbare Leistung aufweisen.

4. Vorrichtung nach einem der Ansprüche 1 - 3,
**dadurch gekennzeichnet,**
daß die erste Frequenz der beiden Umrichter (6, 8) in einem Bereich von 50 kHz - 1,5 MHz liegt und daß die zweite Frequenz der zwei Umrichter (6, 8) in einem Bereich von 1 - 20 kHz liegt, wobei sich die zwei Frequenzen jedoch um eine halbe Dekade oder mehr unterscheiden.

## Revendications

1. Dispositif pour chauffage inductif de pièces symétriques de rotation de forme complexe, par exemple des pignons pour la trempe superficielle de ceux-ci, fonctionnant à au moins deux fréquences différentes, les sorties d'un premier convertisseur (6) produisant une fréquence élevée et d'un second convertisseur (8) produisant une fréquence moyenne étant reliées en commun à un bobine d'induction unique (11) pour activer simultanément ladite bobine, caractérisé en ce que le premier convertisseur (6) est du type circuit résonnant série, le condensateur Cₖ (7) pour compensation série de la puissance réactive de la bobine d'induction (11) produisant une atténuation suffisante de rétroactions de fréquence moyenne étant fournie par le second convertisseur (8) et en ce que le second convertisseur (8) est réalisé en un type de circtuit résonnant série avec une inductance (9) et un condensateur série additionnel (12) en série entre la sortie (8′) et la jonction commune (10) des deux convertisseurs, afin de supprimer la rétroaction de fréquence élevée dudit premier convertisseur (6) et compenser la puissance réactive de ladite inductance (9).

2. Dispositif pour chauffage inductif de pièces symétriques de rotation de forme complexe, par exemple des pignons pour la trempe superficielle de ceux-ci, fonctionnant à au moins deux fréquences différentes, les sorties d'un premier convertisseur (6) produisant une fréquence élevée et d'un second convertisseur (8) produisant une fréquence moyenne étant reliées en commun à une bobine d'induction unique (11) pour activer simultanément ladite bobine, caractérisé en ce que le premier convertisseur (6) est du type circuit résonnant série, le condensateur Cₖ (7) pour compensation série de la puissance réactive de la bobine d'induction (11) produisant une atténuation suffisante de rétroactions de fréquence moyenne étant fournie par le second convertisseur (8) et en ce que le second convertisseur (8) est réalisé en un type de circuit résonnant parallèle avec une inductance (9) en série et un condensateur additionnel (13) parallèle au condensateur de compensation Cₖ (16) afin de supprimer les rétroactions de fréquence élevée dudit premier convertisseur (6) et compenser la puissance réactive de ladite inductance (9).

3. Dispositif selon la revendication 1 ou 2, caractérisé en ce que les deux convertisseurs (6, 8) ont une puissance pouvant être contrôlée individuellement.

4. Dispositif selon l'une quelconque des revendications 1-3, caractérisé en ce que la première fréquence des deux convertisseurs précités (6, 8) s'étend dans une gamme de 50 kHz - 1,5 MHz, et en ce que le second des deux convertisseurs (6, 8) s'étend dans une gamme de 1 - 20 kHz, et lesdites deux fréquences, cependant, différant d'une moitié d'une décade ou plus.
